# EUROPEAN PATENT SPECIFICATION

(11) **EP 4 525 127 B1**
(45) Date of publication and mention of the grant of the patent: **06.05.2026**
(21) Application number: 23899659.9
(22) Date of filing: 31.10.2023
(51) Int. Cl.: H01M 10/0587, H01M 10/0525, H01M 4/13, H01M 50/109, H01M 50/533, H01M 50/586, H01M 50/593, H01M 10/04, H01M 6/00, H01M 4/02

(54) **ELECTRODE ASSEMBLY AND BATTERY**
ELEKTRODENANORDNUNG UND BATTERIE
ENSEMBLE ÉLECTRODE ET BATTERIE

(30) Priority: 05.12.2022 CN 202223267590 U
(43) Date of publication of application: 19.03.2025
(73) Proprietor: Zhuhai CosMX Battery Co., Ltd., Zhuhai, Guangdong 519180 (CN)
(72) Inventor: BAI, Yan, Zhuhai, Guangdong 519180 (CN); ZHU, Xiuzhen, Zhuhai, Guangdong 519180 (CN); YANG, Changjian, Zhuhai, Guangdong 519180 (CN)
(74) Representative: Vossius & Partner Patentanwälte Rechtsanwälte mbB
(86) International application number: PCT/CN2023/128848
(87) International publication number: WO 2024/120078

(56) References cited:
- EP-A1- 3 648 202
- EP-A1- 3 817 123
- WO-A1-2018/179885
- WO-A1-2021/227896
- WO-A1-2021/227896
- CN-A- 115 332 469
- CN-A- 115 332 469
- CN-A- 115 413 379
- CN-U- 215 299 297
- CN-U- 216 354 300
- CN-U- 217 387 214
- CN-U- 219 759 680

## Description

The present application claims priority to Chinese Patent Application No. 202223267590.3, entitled "ELECTRODE ASSEMBLY AND BATTERY", and filed with the China National Intellectual Property Administration on December 05, 2022.

### TECHNICAL FIELD

The present application relates to an electrode assembly and a battery, and relates to the technical field of batteries.

### BACKGROUND

A battery is a device that can convert chemical energy into electrical energy, which includes an electrode assembly and a housing that encapsulates the electrode assembly. The electrode assembly usually includes a positive electrode piece, a negative electrode piece and a separator. Both the positive electrode piece and the negative electrode piece include an active material. The battery is energized by the electrochemical reaction between the positive active material and the negative active material. The separator is located between the positive electrode piece and the negative electrode piece to prevent the two from contacting and causing a short circuit. The positive electrode piece and the negative electrode piece are respectively connected with tabs to realize the connection between the positive and negative electrode pieces and the external circuit of the battery.

In order to prevent the burrs on the tab from piercing the separator and causing a short circuit between the positive electrode piece and the negative electrode piece, the tab is generally provided with a protective layer. However, the commonly used protective layer also blocks the passage of ions, which results in the fact that the portion that the protective layer is attached to fails to undergo electrochemical reactions, affecting the energy of battery.

CN115332469A relates to an electrode assembly which addresses the issue of large positional tolerance for protective layers on electrode pieces of different polarities by arranging the protective layer of second electrode piece on the surface of separator away from the first electrode piece and laminating the separator and the first electrode piece together, thereby achieving dual tab protection.

WO2021227896A1 relates to a battery and an electronic device. The battery includes a first electrode sheet, a second electrode sheet and an insulation separator, where the insulation separator is located between the first electrode sheet and the second electrode sheet; the first electrode sheet includes a first current collector and a first tab, the first current collector includes a first surface and a second surface, and the first surface and the second surface are each provided with a first active material layer; the first active material layer is provided with a first groove and a second groove which are respectively located on the first surface and the second surface and have opposite positions; the first tab is welded in the first groove; and the first groove is covered with at least one insulation layer, and the second groove is covered with at least one insulation layer.

EP3817123A1 relates to an electrode assembly, which includes a positive electrode sheet including a positive electrode active material portion, a positive electrode non-coating portion, and a positive tab arranged on the positive electrode non-coating portion; a negative electrode sheet including a negative electrode active material portion, a negative electrode non-coating portion, and a negative tab arranged on the negative electrode non-coating portion; and a separator configured to insulate the positive electrode sheet and the negative electrode sheet from each other.

### SUMMARY

The present invention is set out in the appended set of claims. The present application provides an electrode assembly, including a positive electrode piece, a negative electrode piece, and a first protective layer arranged on surfaces of the positive electrode piece and the negative electrode piece. The first protective layer has several holes capable of allowing ions to pass through, which can take into account the energy of battery on the basis of protecting the burrs of the tab from piercing the separator.

The present application further provides a battery including the above electrode assembly.

A first aspect of the present application provides an electrode assembly, including a positive electrode piece and a negative electrode piece that are formed by winding, where the positive electrode piece includes a positive electrode current collector and a positive electrode tab, and the positive electrode tab is divided into a first region and a second region, with the first region being connected to the positive electrode current collector, the second region extending outward from the first region along a width direction of the positive electrode current collector to an exterior of the positive electrode current collector;
the electrode assembly further includes a first protective layer, where the first protective layer has several holes to allow ions to pass through two surfaces of the first protective layer that are parallel to each other;
the first protective layer is arranged on surfaces of the positive electrode piece and the negative electrode piece, and in a projection plane based on a length direction and a width direction of the electrode assembly, an orthographic projection of the first protective layer in the projection plane covers an orthographic projection of the first region in the projection plane.

In a specific embodiment, the negative electrode piece includes a negative electrode current collector and a negative electrode tab which is divided into a third region and a fourth region, with the third region being connected to the negative electrode current collector and the fourth region extending outward from the third region along a width direction of the negative electrode current collector to an exterior of the negative electrode current collector;
the electrode assembly further includes a second protective layer capable of blocking ions from passing through two surfaces of the second protective layer that are parallel to each other, where the second protective layer is arranged on the surfaces of the positive electrode piece and the negative electrode piece, and an orthographic projection of the second protective layer in the projection plane covers an orthographic projection of the third region in the projection plane.

In a specific embodiment, the orthographic projection of the second protective layer arranged on the surface of the negative electrode piece in the projection plane is a first projection, and the orthographic projection of the second protective layer arranged on the surface of the positive electrode piece in the projection plane is a second projection, with the first projection being located within the second projection.

In a specific embodiment, the positive electrode current collector includes a first surface and a second surface that are parallel and opposite to each other, the first surface is connected to the first region of the positive electrode tab, the second surface is provided with a positive electrode active material layer, and an orthographic projection of the positive electrode active material layer on the positive electrode current collector covers or does not cover an orthographic projection of the first region on the positive electrode current collector;
the first protective layer is arranged on a surface of the first region away from the positive electrode current collector and a surface of the positive electrode active material layer away from the positive electrode current collector.

In a specific embodiment, the negative electrode piece further includes a negative electrode active material layer arranged on a surface of a negative electrode current collector, a surface of the negative electrode active material layer away from the negative electrode current collector is also provided with the first protective layer, and the first protective layer arranged on the surface of the negative electrode active material layer is opposite to the first protective layer arranged on the surface of the positive electrode piece.

In a specific embodiment, the negative electrode current collector includes a third surface and a fourth surface that are parallel and opposite to each other, with the third surface being connected to a third region of the negative electrode tab and the fourth surface being provided with a negative electrode active material layer, and an orthographic projection of the negative electrode active material layer on the negative electrode current collector does not cover an orthographic projection of the third region on the negative electrode current collector;
the second protective layer is arranged on a surface of the third region away from the negative electrode current collector and on a surface of the negative electrode active material layer away from the negative electrode current collector.

In a specific embodiment, the positive electrode piece further includes a positive electrode active material layer arranged on a surface of the positive electrode current collector, and the second protective layer is arranged on a surface of the positive electrode active material layer away from the positive electrode current collector, with the second protective layer arranged on the surface of the positive electrode active material layer being opposite to the second protective layer arranged on the surface of the negative electrode piece.

In a specific embodiment, the negative electrode current collector includes a third surface and a fourth surface that are parallel and opposite to each other, with the third surface being connected to the third region of the negative electrode tab and the fourth surface being provided with a negative electrode active material layer, and an orthographic projection of the negative electrode active material layer on the negative electrode current collector covers an orthographic projection of the third region on the negative electrode current collector;
the first protective layer is arranged on a surface of the negative electrode active material layer away from the negative electrode current collector, and the second protective layer is arranged on a surface of the third region away from the negative electrode current collector.

In a specific embodiment, the positive electrode piece further includes a positive electrode active material layer arranged on a surface of the positive electrode current collector, and the surface of the positive electrode active material layer away from the positive electrode current collector is provided with the first protective layer and the second protective layer;
the first protective layer arranged on the surface of the positive electrode active material layer is opposite to the first protective layer arranged on the surface of the negative electrode piece, and the second protective layer arranged on the surface of the positive electrode active material layer is opposite to the second protective layer arranged on the surface of the negative electrode piece.

In a specific embodiment, the positive electrode piece further includes a positive electrode active material layer arranged on a surface of the positive electrode current collector, and at least part of a surface of the positive electrode active material layer close to a finishing point of winding is provided with a second protective layer capable of blocking ions from passing through two surfaces of the second protective layer that are parallel to each other, and the second protective layer extends toward the finishing point of winding to the at least part of the surface of the positive electrode current collector.

In a specific embodiment, the first protective layer includes a glue layer, and the glue layer includes one of polystyrene, polyisobutylene, polypropylene, epoxidized polyisobutylene, polyphenylbutylene, or polybutylene cyanide.

In a specific embodiment, the first protective layer includes a first glue layer and a second glue layer which are laminated in sequence, and a peel strength of the first glue layer and a peel strength of the second glue layer are the same or different.

A second aspect of the present application provides a battery, including any of the electrode assemblies described above.

In a specific embodiment, the battery is a button battery, including any of the electrode assemblies described above and a housing encapsulating the electrode assembly, where the housing includes a first electrode piece and a second electrode piece, and the first protective layer is arranged between the first electrode piece and the second electrode piece.

The implementations of the present application have at least the following advantages.
1. In the present application, the surfaces of the positive electrode piece and the negative electrode piece are provided with a first protective layer having several holes that allow ions to pass through, which realizes an electrochemical reaction between the positive electrode piece and the negative electrode piece that are covered by the first protective layer, thereby improving the energy of battery. Therefore, the electrode assembly provided by the present application can take into account the energy of battery on the basis of protecting the burrs of tabs from piercing the separator.
2. The present application further provides a battery including the above-mentioned electrode assembly, having higher energy and better safety performance.
3. When the battery is a button battery, its housing includes a first electrode piece, a second electrode piece and a first protective layer arranged between the first electrode piece and the second electrode piece. Since the first protective layer has several holes, allowing ions to pass through, which is helpful to improve the wettability of the electrolyte to the electrode assembly and improve the energy and rate performance of the button battery.

### BRIEF DESCRIPTION OF DRAWINGS

In order to illustrate the technical solutions in the embodiments of the present application or in the prior art more clearly, the drawings required in the description of the embodiments or in the prior art will be briefly introduced below. Obviously, the drawings in the following description are only some embodiments of the present application. For the person skilled in the art, other drawings may also be obtained based on these drawings without creative work.
FIG. 1 is a structurally schematic diagram of an electrode assembly provided by the prior art.
FIG. 2 is a structurally schematic diagram of an electrode assembly provided by an embodiment of the present application.
FIG. 3 is a structurally schematic diagram of a positive electrode piece provided by an embodiment of the present application.
FIG. 4 is a schematic diagram of connection between a positive electrode tab and a positive electrode current collector provided by an embodiment of the present application.
FIG. 5 is a structurally schematic diagram of a first surface of a positive electrode current collector provided by an embodiment of the present application.
FIG. 6 is a structurally schematic diagram of a second surface of a positive electrode current collector provided by an embodiment of the present application.
FIG. 7 is a structurally schematic diagram of a negative electrode piece provided by an embodiment of the present application.
FIG. 8 is a schematic diagram of connection between a negative electrode tab and the negative electrode current collector provided by an embodiment of the present application.
FIG. 9 is a structurally schematic diagram of a third surface of a negative electrode current collector provided by an embodiment of the present application.
FIG. 10 is a structurally schematic diagram of a fourth surface of a negative electrode current collector provided by an embodiment of the present application.
FIG. 11 is a structurally schematic diagram of an electrode assembly provided by another embodiment of the present application.
FIG. 12 is a structurally schematic diagram of a first protective layer provided by an embodiment of the present application.
FIG. 13 is a structurally schematic diagram of a first protective layer provided by another embodiment of the present application.
FIG. 14 is a structurally schematic diagram of a second protective layer provided by an embodiment of the present application.
FIG. 15 is a physical diagram of a positive electrode piece provided with a first protective layer provided by an embodiment of the present application.
FIG. 16 is a physical diagram of a negative electrode piece provided with a first protective layer provided by an embodiment of the present application.
FIG. 17 is a structurally schematic diagram of a button battery provided by an embodiment of the present application.

Description of reference signs:
101 - positive electrode current collector;
a - first surface of the positive electrode current collector;
b - second surface of the positive electrode current collector;
102 - positive electrode active material layer;
201 - negative electrode current collector;
e - third surface of the negative electrode current collector;
f - fourth surface of the negative electrode current collector;
202 - negative electrode active material layer;
300 - positive electrode tab;
c - first region;
d - second region;
400 - negative electrode tab;
g - third region;
h - fourth region;
500 - first protective layer;
501 - first glue layer;
502 - second glue layer;
600 - second protective layer;
601 - substrate;
602 - glue layer;
700 - housing;
800 - first electrode piece.

### DESCRIPTION OF EMBODIMENTS

In order to make the purpose, technical solutions and advantages of the present application clearer, the technical solutions in the embodiments of the present application will be clearly and completely described below in combination with the embodiments in the present application. Obviously, the described embodiments are part of the embodiments of the present application, but not all of them. Based on the embodiments in the present application, all other embodiments obtained by the person skilled in the art without creative work fall within the protection scope of the present application.

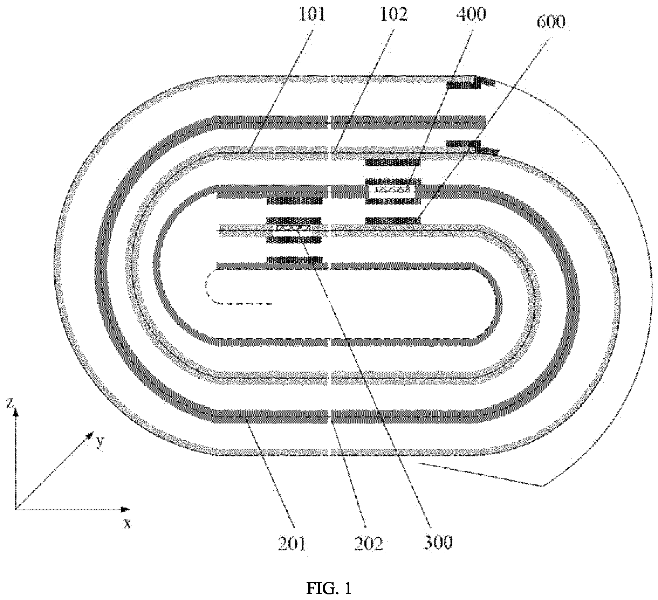

FIG. 1 is a structurally schematic diagram of an electrode assembly provided by the prior art. As shown in FIG. 1, the electrode assembly includes a positive electrode piece, a separator (not shown in the figure) and a negative electrode piece which are laminated in sequence and wound. The positive electrode piece includes a positive electrode current collector 101, a positive electrode active material layer 102 arranged on the surface of the positive electrode current collector 101, and a positive electrode tab 300 directly connected to the surface of the positive electrode current collector 101. The negative electrode piece includes a negative electrode current collector 201, a negative electrode active material layer 202 arranged on the surface of the negative electrode current collector 201, and a negative electrode tab 400 directly connected to the surface of the negative electrode current collector 201. The separator is located between the positive electrode piece and the negative electrode piece to prevent the two from contacting with each other and causing a short circuit.

Taking lithium-ion batteries as an example, the positive electrode active material layer 102 includes a positive electrode active material, and the negative electrode active material layer 202 includes a negative electrode active material. The electrochemical reaction is completed by the de-insertion and insertion of lithium ions between the positive electrode active material and the negative electrode active material, which provides energy for the lithium-ion battery.

In order to prevent the burrs on the surfaces of the positive electrode tab 300 and the negative electrode tab 400 from piercing the separator and causing a short circuit due to contact between the positive electrode piece and the negative electrode piece, a protective layer is generally arranged on the surfaces of the positive electrode tab 300 and the negative electrode tab 400. However, the commonly used protective layer also blocks the passage of lithium ions, which results in the fact that the portion covered by the protective layer fails to perform an electrochemical reaction, affecting the energy of battery.

In order to solve the above problems, a first aspect of the present application provides an electrode assembly, including a positive electrode piece and a negative electrode piece that are formed by winding. The positive electrode piece includes a positive electrode current collector and a positive electrode tab which is divided into a first region and a second region, where the first region is connected to the positive electrode current collector and the second region extends outward from the first region along a width direction of the positive electrode current collector to the exterior of the positive electrode current collector.

The electrode assembly further includes a first protective layer, and the first protective layer has several holes, which allows ions to pass through two surfaces of the first protective layer which are parallel to each other.

The first protective layer is arranged on the surfaces of the positive electrode piece and the negative electrode piece; and in a projection plane based on a length direction and a width direction of the electrode assembly, an orthographic projection of the first protective layer in the projection plane covers an orthographic projection of the first region in the projection plane.

In the present application, the projection plane refers to a projection plane based on the length direction and the width direction of the electrode assembly, that is, the x-axis direction shown in FIG. 1 is the length direction, the y-axis direction is the width direction, and the z-axis direction is the thickness direction. By arranging the first protective layer on the surfaces of the positive electrode piece and the negative electrode piece, with the first protective layer having several holes that allow ions to pass through, the electrochemical reaction between the positive electrode piece and the negative electrode piece covered by the first protective layer is realized, thereby improving the energy of battery. Therefore, the electrode assembly provided by the present application can take into account the energy of battery on the basis of protecting the burrs of the tabs from piercing the separator.

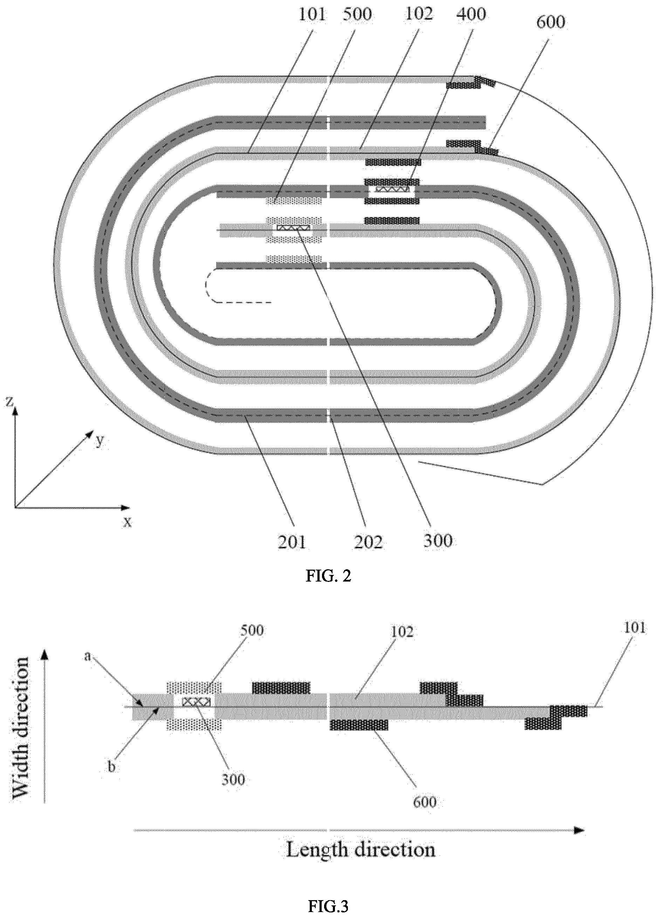

In a specific embodiment, FIG. 2 is a structurally schematic diagram of an electrode assembly provided by an embodiment of the present application. As shown in FIG. 2, the electrode assembly includes a positive electrode piece and a negative electrode piece which are laminated and wound, and the positive electrode piece and the negative electrode piece include a positive electrode tab 300 and a negative electrode tab 400 respectively. In order to achieve double protection of the positive electrode tab 300 and the negative electrode tab 400, the surface of the positive electrode piece and the surface of the negative electrode piece are provided with first protective layers 500 respectively. The first protective layers 500 can allow ions to pass through, so that the electrochemical reaction between the positive electrode piece and the negative electrode piece which are covered by the first protective layers can be carried out.

The electrode assembly further includes a second protective layer 600, which is a conventional protective layer capable of blocking ions from passing through, thereby preventing ions de-inserted from the positive electrode active material layer 102 from being unable to embed into the negative electrode active material layer 202 and causing problems of precipitation of ions.

Further, an orthographic projection of the second protective layer 600 arranged on the surface of the negative electrode piece in the projection plane is a first projection, and the orthographic projection of the second protective layer 600 arranged on the surface of the positive electrode piece in the projection plane is a second projection, and the first projection is located within the second projection. That is, the area of the second protective layer 600 arranged on the surface of the negative electrode piece is smaller than the area of the second protective layer 600 arranged on the surface of the positive electrode piece, so that the effective area of the negative electrode active material layer 202 is larger than the effective area of the positive electrode active material layer 102, thereby preventing the precipitation of ions from the negative electrode piece which affects the safety of the battery.

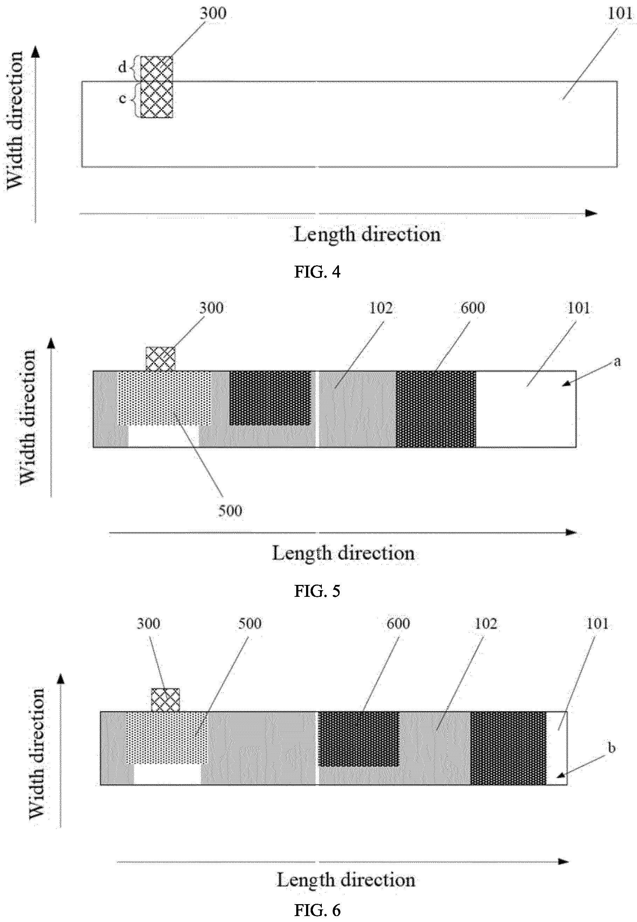

FIG. 3 is a structurally schematic diagram of a positive electrode piece provided by an embodiment of the present application. FIG. 4 is a schematic diagram of connection between a positive electrode tab and a positive electrode current collector provided by an embodiment of the present application. FIG. 5 is a structurally schematic diagram of a first surface of a positive electrode current collector provided by an embodiment of the present application. FIG. 6 is a structurally schematic diagram of a second surface of a positive electrode current collector provided by an embodiment of the present application. As shown in FIG. 3 to FIG. 6, the positive electrode piece includes a positive electrode current collector 101, a positive active material layer 102, and a positive electrode tab 300. The positive electrode current collector 101 is a thin sheet-like metal conductor, which includes a first surface *a* and a second surface *b* that are parallel and opposite to each other; and the positive electrode tab 300 is divided into a first region *c* and a second region *d*, with the first region *c* being directly connected to the first surface *a* of the positive electrode current collector 101 and the second region *d* extending outward from the first region *c* along the width direction of the positive electrode current collector 101 to the exterior of the positive electrode current collector 101, realizing the connection between the external circuit and the positive electrode piece. The portion of first surface *a* outside the region where the first surface *a* is connected to the first region *c* of the positive electrode tab 300 and the second surface *b* are each provided with the positive electrode active material layer 102, and the length of the positive electrode active material layer 102 may be set according to actual needs. The orthographic projection of the positive electrode active material layer 102 on the positive electrode current collector 101 does not cover the orthographic projection of the first region *c* on the positive electrode current collector 101, that is, the region of the positive electrode current collector 101 corresponding to the first region *c* is not covered by the positive electrode active material layer 102.

The first protective layers 500 are arranged on the surface of the first region c away from the positive electrode current collector 101 and the surface of the positive electrode active material layer 102 away from the positive electrode current collector 101 respectively; and, in the projection plane based on the length direction and the width direction of the electrode assembly, the orthographic projection of the first protective layer 500 in the projection plane covers the orthographic projection of the first region c in the projection plane.

The second protective layer 600 is arranged on the surface of the positive electrode active material layer away from the positive electrode current collector, and the orthographic projection of the second protective layer in the projection plane covers the orthographic projection of the third region *g* of the negative electrode tab 400 in the projection plane. That is, the second protective layer 600 arranged on the surface of the positive electrode active material layer 102 is opposite to the second protective layer 600 arranged on the surface of the negative electrode tab 400, for protecting the negative electrode tab 400.

In addition, a second protective layer 600 is also provided on at least a portion of the surface of the positive electrode active material layer 102 close to the finishing point of winding, and the second protective layer 600 extends toward the finishing point of winding to at least a portion of the surface of the positive electrode current collector 101. Since the second protective layer 600 is capable of blocking ions from passing through, the positive electrode active material layer 102 covered by it is unable to electrochemically react with the negative electrode active material layer 202, avoiding the problem of precipitation of ions from the negative electrode piece on the side of the electrode assembly close to the finishing point of winding.

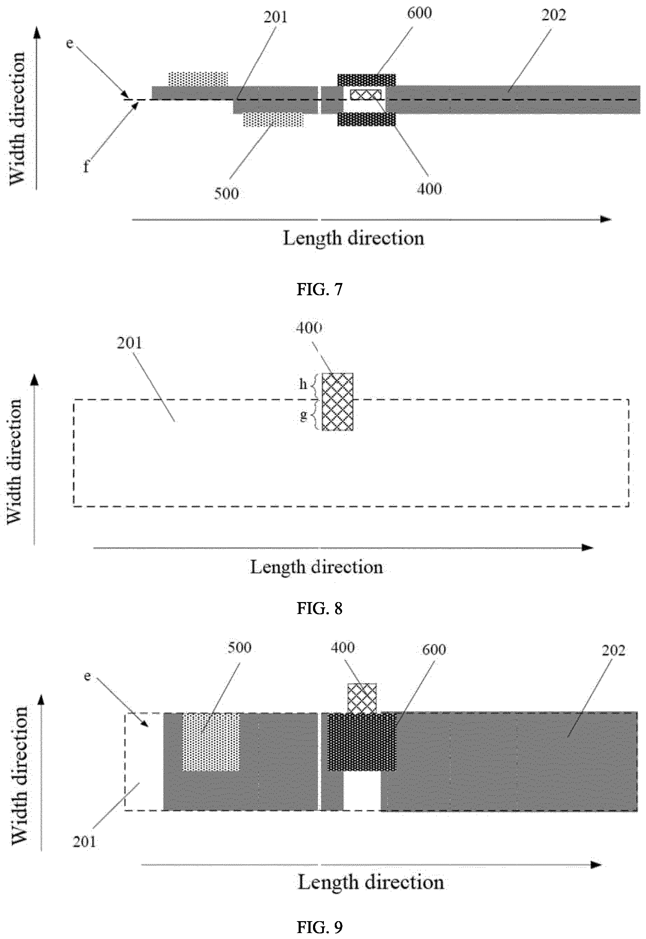

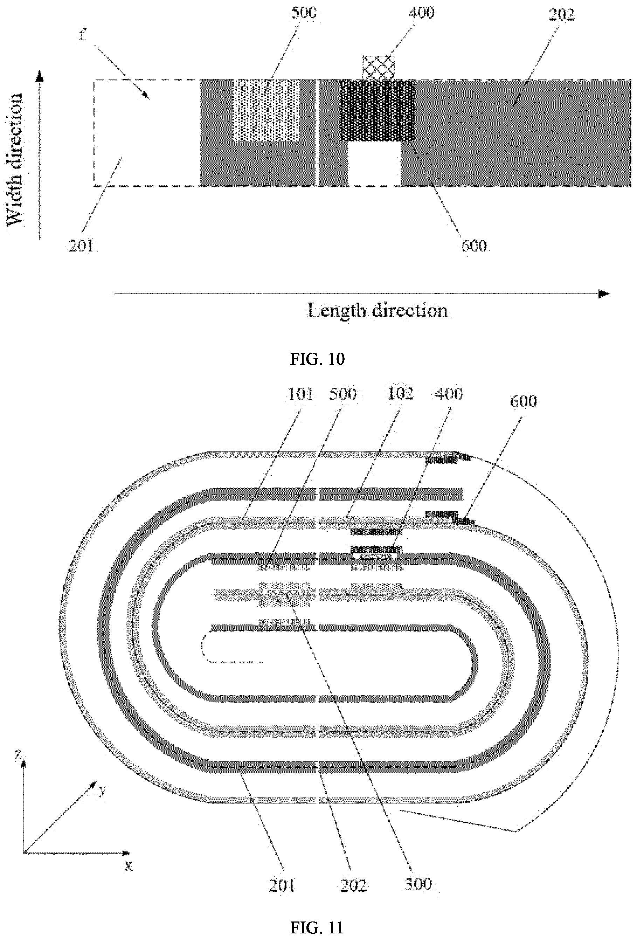

FIG. 7 is a structurally schematic diagram of a negative electrode piece provided by an embodiment of the present application. FIG. 8 is a schematic diagram of connection between the negative electrode tab and the negative electrode current collector provided by an embodiment of the present application. FIG. 9 is a structurally schematic diagram of a third surface of a negative electrode current collector provided by an embodiment of the present application. FIG. 10 is a structurally schematic diagram of a fourth surface of a negative electrode current collector provided by an embodiment of the present application. As shown in FIG. 7 to FIG. 10, the negative electrode piece includes a negative electrode current collector 201, a negative electrode active material layer 202 and a negative electrode tab 400, where the negative electrode current collector 201 is a thin sheet-like metal conductor, including a third surface *e* and a fourth surface *f* that are parallel and opposite to each other; and the negative electrode tab 400 is divided into a third region *g* and a fourth region *h*, with the third region *g* being directly connected to the surface *e* of the negative electrode current collector 201 and the fourth region *h* extending outward from the third region *g* along the width direction of the negative electrode current collector 201 to the exterior of the negative electrode current collector 201, realizing the connection between the external circuit and the negative electrode piece. The portion of the third surface *e* outside the region where the third surface *e* is connected to the third region *g* of the negative electrode tab 400 and the fourth surface *f* are provided with negative electrode active material layers 202 respectively, and the length of the negative electrode active material layer 202 may be set according to actual needs. The orthographic projection of the negative electrode active material layer 202 on the negative electrode current collector 201 does not cover the orthographic projection of the third region *g* on the negative electrode current collector 201, that is, the region of the negative electrode current collector 201 corresponding to the third region *g* is not covered by the negative electrode active material layer 202.

A first protective layer 500 and a second protective layer 600 are also arranged on the surface of the negative electrode piece. The first protective layer 500 is arranged on the surface of the negative electrode active material layer 202 away from the negative electrode current collector 201, and the orthographic projection of the first protective layer 500 in the projection plane covers the orthographic projection of the first region *c* of the positive electrode tab 300 in the projection plane, and is opposite to the first protective layer arranged on the surface of the positive electrode piece.

The second protective layer 600 is arranged on the surface of the third region g away from the negative electrode current collector 201 and the surface of the negative electrode active material layer 202 away from the negative electrode current collector 201; and the orthographic projection of the second protective layer 600 in the projection plane covers the orthographic projection of the third region g in the projection plane, achieving the protection for the negative electrode tab 400.

In another specific embodiment, FIG. 11 is a structurally schematic diagram of an electrode assembly provided by another embodiment of the present application. As shown in FIG. 11, in order to further improve the energy of battery, the orthographic projection of the positive electrode active material layer 102 on the positive electrode current collector 101 covers the orthographic projection of the first area c on the positive electrode current collector 101, that is, on the second surface *b* of the positive electrode current collector that is not provided with the positive electrode tab 300, the positive electrode active material layer 102 is continuously coated. Like the arrangement mode of the positive electrode active material layer 102, the orthographic projection of the negative electrode active material layer 202 on the negative electrode current collector 201 covers the orthographic projection of the third area *g* on the negative electrode current collector 201.

The fourth surface *f*, that is not provided with the negative electrode tab 400, of the negative electrode current collector 201 is provided with a continuous negative electrode active material layer 202. A first protective layer 500 may be arranged on the surface of the negative electrode active material layer 202; and the surface of the positive electrode active material layer 102 corresponding to this first protective layer 500 may also be provided with a first protective layer 500, which realizes the electrochemical reaction between the positive electrode active material layer 102 and the negative electrode active material layer 202 covered by the first protective layers, thereby improving the energy of battery.

It can be understood that the above two embodiments only show one winding mode of the positive electrode piece and the negative electrode piece, and the person skilled in the art may make adjustments according to actual needs to obtain electrode assemblies with different winding modes.

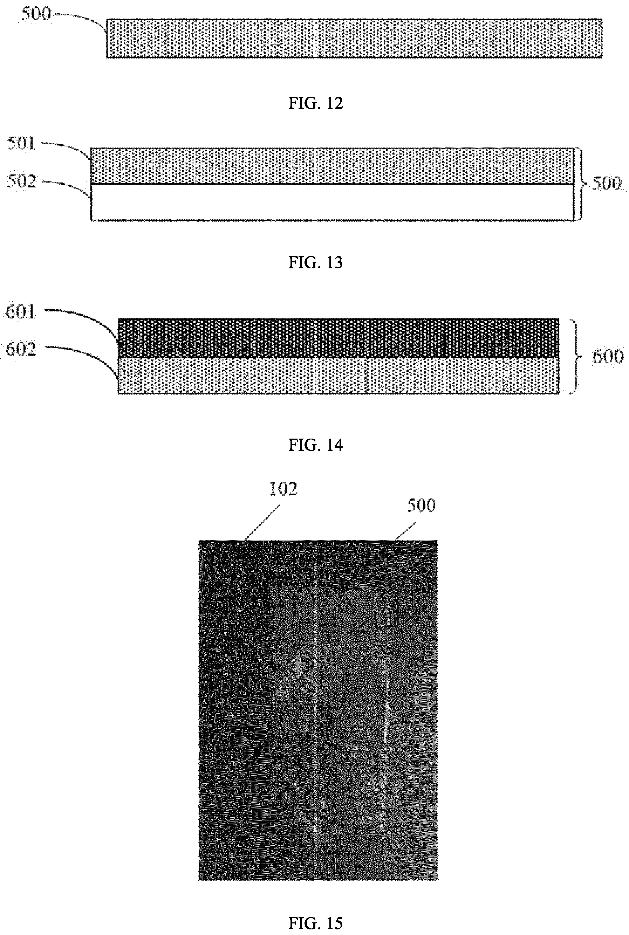

FIG. 12 is a structurally schematic diagram of a first protective layer provided by an embodiment of the present application. As shown in FIG. 12, the first protective layer 500 includes a single glue layer having several holes, allowing ions and an electrolyte to pass through the holes from the upper surface of the first protective layer 500 to the lower surface of the first protective layer 500.

Specifically, the average aperture of the pores is 3-25nm, with a maximum value of 30nm. The value of air permeability of the first protective layer 500 is 300s to 500s, i.e., the time required for 100 mL of gas to pass through the first protective layer 500. The first protective layer 500 has a puncture strength of 0.5-10N, and a peeling force of 0.01-1kgf. The glue layer may include one of polystyrene, polyisobutylene, polypropylene, epoxidized polyisobutylene, polyphenylbutylene, or polybutylene cyanide.

FIG. 13 is a structurally schematic diagram of a first protective layer provided by another embodiment of the present application. As shown in FIG. 13, the first protective layer 500 includes a first glue layer 501 and a second glue layer 502 which are laminated. The peel strength of the first glue layer 501 and the peel strength of the second glue layer 502 may be the same or different. Different materials of glue layer may be selected according to the objects to be bonded so as to meet different bonding requirements. Specifically, the peeling force of the first glue layer 501 is 0-0.05Kgf, and the peeling force of the second glue layer 502 is 0.05-1kgf. The materials of the first glue layer 501 and the second glue layer 502 may be the same or different. When the materials of the first glue layer 501 and the second glue layer 502 are the same, the molecular weight of the materials may be adjusted to achieve different peeling forces. For example, the molecular weight of the first glue layer is 10,000-500,000 and the molecular weight of the second glue layer is 200,000-5,000,000. When the materials are different, the first glue layer may be a polyolefin, which has a smaller polarity and relatively smaller adhesion, and the second glue layer may be a material with a larger polarity such as polyacrylic acid, polybutylene cyanide, etc., so as to achieve a greater adhesion.

Considering the protective effect of the first protective layer 500 on the tab and the energy density of battery, the thickness of the first protective layer is 5-30µm. When the first protective layer 500 includes a single glue layer, the thickness of the single glue layer is 5-30µm. When the first protective layer 500 includes a first glue layer and a second glue layer, the total thickness of the first glue layer and the second glue layer is 5-30µm.

FIG. 14 is a structurally schematic diagram of a second protective layer provided by an embodiment of the present application. As shown in FIG. 14, the second protective layer 600 includes a base layer 601 and a glue layer 602, the glue layer 602 is arranged on the side close to the tab, and the base layer 601 is arranged on the side close to the separator. The base layer 601 includes one or two of PET or PI, and the base layer 601 is capable of blocking ions and electrolyte from passing through, so that the active material layer covered by the second protective layer 600 fails to undergo an electrochemical reaction. The glue layer 602 may be made of the same material as the first protective layer 500.

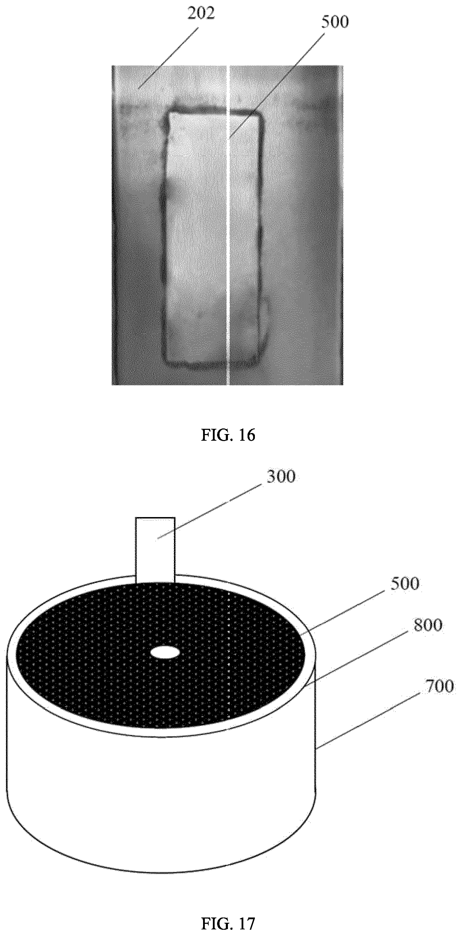

FIG. 15 is a physical diagram of a positive electrode piece provided with a first protective layer provided by an embodiment of the present application. FIG. 16 is a physical diagram of a corresponding negative electrode piece provided by an embodiment of the present application. As shown in FIG. 15 to FIG. 16, a first protective layer 500 with a thickness of 10µm is arranged on the surface of the positive electrode active material layer 102, and the above-mentioned first protective layer 500 is also arranged on the surface of the corresponding negative electrode active material layer 202. A lithium-ion battery is prepared and obtained by combining the above-mentioned positive electrode piece and negative electrode piece with a separator using conventional technical means. The battery is charged, and when it reaches a fully charged state, it is disassembled. It is observed that the surface of the negative electrode active material layer 202 shows golden yellow, indicating that lithium ions can pass through the first protective layer 500 to complete the electrochemical reaction between the positive electrode piece and the negative electrode piece, and that the positive electrode active material layer covered by the first protective layer 500 can exert its capacity.

In summary, in the present application, the surfaces of the positive electrode piece and the negative electrode piece are provided with a first protective layer having several holes that allow ions to pass through, which realizes an electrochemical reaction between the positive electrode piece and the negative electrode piece that are covered by the first protective layer, thereby improving the energy of battery. Therefore, the electrode assembly provided by the present application can take into account the energy and the problems of precipitation of ions of the battery on the basis of protecting the burrs of tabs from piercing the separator.

A second aspect of the present application provides a battery, including any of the electrode assemblies described above.

The present application provides a battery. Based on the electrode assembly provided by the first aspect of the present application, the battery may be prepared according to conventional technical means in the art. The battery provided by the present application has good capacity and energy density on the basis of meeting its safety requirements.

In a specific embodiment, FIG. 17 is a structurally schematic diagram of a button battery provided by an embodiment of the present application. As shown in FIG. 17, when the battery is a button battery, it includes the electrode assembly provided by the first aspect of the present application and a housing 700 for accommodating the electrode assembly. The housing 700 includes a first electrode piece 800 and a second electrode piece (not shown in the figure). A first protective layer 500 is arranged above the first electrode piece 800 away from the electrode assembly, and a second electrode piece is arranged above the first protective layer 500 away from the first electrode piece, that is, the first protective layer 500 is located between the first electrode piece and the second electrode piece. The present application uses the first protective layer 500 having a pore structure to replace the conventional insulating protective layer in the art, allowing the electrolyte to pass through the first protective layer, thereby improving the wettability of the electrode assembly.

It should be noted that, in the description of the present application, terms such as "inside" and "outside" for indicating orientation or positional relationship are based on the orientation or positional relationship shown in the drawings, which is only for the convenience for description, rather than indicating or implying that the device or component should have a specific orientation and be constructed and operated in a specific orientation. Therefore, it should not be understood as a limitation to the present application.

In the description of the present application, it should be understood that the terms "upper", "lower", etc., for indicating orientation or positional relationship are based on the orientation or positional relationship shown in the drawings, which is only for the convenience for describing the present application and simplifying the description, rather than indicating or implying that the device or component should have a specific orientation and be constructed and operated in a specific orientation. Therefore, it should not be understood as a limitation to the present application.

In the description of the present application, it should be noted that, unless otherwise clearly specified and limited, the term "connection" should be understood in a broad sense. For example, it may be a fixed connection, a detachable connection, or an integral connection; it may be a mechanical connection or an electrical connection; it may be a direct connection, an indirect connection through an intermediate medium, or the internal communication of two elements. For the person skilled in the art, the specific meanings of the above term in the present application may be understood by specific situations.

The terms "first", "second", "third", and "fourth" in the specification and claims of the present application and the above-mentioned description of drawings are used to distinguish similar objects, and are not necessarily used to describe a particular order or sequence. It should be understood that the terms used in this way may be interchanged where appropriate, so that the embodiments of the present application described herein can be implemented in an order other than those illustrated or described herein.

The above various embodiments are only used to illustrate the technical solutions of the present application, rather than limiting them; although detailed description has been made to the present application with reference to the aforementioned various embodiments, the person skilled in the art should understand that they may still modify the technical solutions recorded in the aforementioned various embodiments, or perform equivalent replacements on some or all of the technical features; however, these modifications or replacements do not make the essence of the corresponding technical solutions deviate from the scope of technical solutions in various embodiments of the present application.

## Claims

1. An electrode assembly, comprising a positive electrode piece, a separator and a negative electrode piece that are laminated in sequence and formed by winding, wherein the positive electrode piece comprises a positive electrode current collector (101) and a positive electrode tab (300), and the positive electrode tab (300) is divided into a first region (c) and a second region (d), with the first region (c) being connected to the positive electrode current collector (101) and the second region (d) extending outward from the first region (c) along a width direction of the positive electrode current collector (101) to an exterior of the positive electrode current collector (101);
**characterized in that** the electrode assembly further comprising a first protective layer (500), wherein the first protective layer (500) has several holes to allow ions to pass through two surfaces of the first protective layer (500) that are parallel to each other;
the first protective layer (500) is arranged on surfaces of the positive electrode piece and the negative electrode piece, and in a projection plane based on a length direction and a width direction of the electrode assembly, an orthographic projection of the first protective layer (500) in the projection plane covers an orthographic projection of the first region (c) in the projection plane.

2. The electrode assembly according to claim 1, wherein the negative electrode piece comprises a negative electrode current collector (201) and a negative electrode tab (400) which is divided into a third region (g) and a fourth region (h), with the third region (g) being connected to the negative electrode current collector (201) and the fourth region (h) extending outward from the third region (g) along a width direction of the negative electrode current collector (201) to an exterior of the negative electrode current collector (201);
the electrode assembly further comprising a second protective layer (600) capable of blocking ions from passing through two surfaces of the second protective layer (600) that are parallel to each other, wherein the second protective layer (600) is arranged on the surfaces of the positive electrode piece and the negative electrode piece, and an orthographic projection of the second protective layer (600) in the projection plane covers an orthographic projection of the third region (g) in the projection plane.

3. The electrode assembly according to claim 2, wherein the orthographic projection of the second protective layer (600) arranged on the surface of the negative electrode piece in the projection plane is a first projection, and the orthographic projection of the second protective layer (600) arranged on the surface of the positive electrode piece in the projection plane is a second projection, with the first projection being located within the second projection.

4. The electrode assembly according to claim 1, wherein the positive electrode current collector (101) comprises a first surface (a) and a second surface (b) that are parallel and opposite to each other, the first surface (a) is connected to the first region (c) of the positive electrode tab (300), the second surface (b) is provided with a positive electrode active material layer (102), and an orthographic projection of the positive electrode active material layer (102) on the positive electrode current collector (101) covers or does not cover an orthographic projection of the first region (c) on the positive electrode current collector (101);
the first protective layer (500) is arranged on a surface of the first region (c) away from the positive electrode current collector (101) and a surface of the positive electrode active material layer (102) away from the positive electrode current collector (101).

5. The electrode assembly according to claim 4, wherein the negative electrode piece comprises a negative electrode current collector (201) and a negative electrode active material layer (202) arranged on a surface of the negative electrode current collector (201), a surface of the negative electrode active material layer (202) away from the negative electrode current collector (201) is also provided with the first protective layer (500), and the first protective layer (500) arranged on the surface of the negative electrode active material layer (202) is opposite to the first protective layer (500) arranged on the surface of the positive electrode piece.

6. The electrode assembly according to claim 2, wherein the negative electrode current collector (201) comprises a third surface (e) and a fourth surface (f) that are parallel and opposite to each other, with the third surface (e) being connected to the third region (g) of the negative electrode tab (400) and the fourth surface (f) being provided with a negative electrode active material layer (202), and an orthographic projection of the negative electrode active material layer (202) on the negative electrode current collector (201) does not cover an orthographic projection of the third region (g) on the negative electrode current collector (201);
the second protective layer (600) is arranged on a surface of the third region (g) away from the negative electrode current collector (201) and on a surface of the negative electrode active material layer (202) away from the negative electrode current collector (201).

7. The electrode assembly according to claim 6, wherein the positive electrode piece further comprises a positive electrode active material layer (102) arranged on a surface of the positive electrode current collector (101), and the second protective layer (600) is arranged on a surface of the positive electrode active material layer (102) away from the positive electrode current collector (101), with the second protective layer (600) arranged on the surface of the positive electrode active material layer (102) being opposite to the second protective layer (600) arranged on the surface of the negative electrode piece.

8. The electrode assembly according to claim 2, wherein the negative electrode current collector (201) comprises a third surface (e) and a fourth surface (f) that are parallel and opposite to each other, with the third surface (e) being connected to the third region (g) of the negative electrode tab (400) and the fourth surface (f) being provided with a negative electrode active material layer (202), and an orthographic projection of the negative electrode active material layer (202) on the negative electrode current collector (201) covers an orthographic projection of the third region (g) on the negative electrode current collector (201);
the first protective layer (500) is arranged on a surface of the negative electrode active material layer (202) away from the negative electrode current collector (201), and the second protective layer (600) is arranged on a surface of the third region (g) away from the negative electrode current collector (201).

9. The electrode assembly according to claim 8, wherein the positive electrode piece further comprises a positive electrode active material layer (102) arranged on a surface of the positive electrode current collector (101), and a surface of the positive electrode active material layer (102) away from the positive electrode current collector (101) is provided with the first protective layer (500) and the second protective layer (600);
the first protective layer (500) arranged on the surface of the positive electrode active material layer (102) is opposite to the first protective layer (500) arranged on the surface of the negative electrode piece, and the second protective layer (600) arranged on the surface of the positive electrode active material layer (102) is opposite to the second protective layer (600) arranged on the surface of the negative electrode piece.

10. The electrode assembly according to any one of claims 1 to 9, wherein the positive electrode piece further comprises a positive electrode active material layer (102) arranged on a surface of the positive electrode current collector (101), and at least part of a surface of the positive electrode active material layer (102) close to a finishing point of winding is provided with a second protective layer (600) capable of blocking ions from passing through two surfaces of the second protective layer (600) that are parallel to each other, and the second protective layer (600) extends toward the finishing point of winding to the at least part of the surface of the positive electrode current collector (101).

11. The electrode assembly according to any one of claims 1 to 10, wherein the first protective layer (500) comprises a glue layer (602), and the glue layer (602) comprises one of polystyrene, polyisobutylene, polypropylene, epoxidized polyisobutylene, polyphenylbutylene, or polybutylene cyanide.

12. The electrode assembly according to claim 11, wherein the first protective layer (500) comprises a first glue layer (501) and a second glue layer (502) which are laminated in sequence, and a peel strength of the first glue layer (501) and a peel strength of the second glue layer (502) are the same or different.

13. A battery, comprising the electrode assembly according to any one of claims 1 to 12.

14. The battery according to claim 13, wherein the battery is a button battery and further comprises a housing (700) encapsulating the electrode assembly; the housing (700) comprises a first electrode piece (800) and a second electrode piece; and the first protective layer (500) is arranged between the first electrode piece (800) and the second electrode piece.

## Patentansprüche

1. Elektrodenanordnung, umfassend ein positives Elektrodenstück, einen Separator und ein negatives Elektrodenstück, die der Reihe nach laminiert sind und durch Wickeln gebildet werden, wobei das positive Elektrodenstück einen positiven Elektrodenstromableiter (101) und eine positive Elektrodenlasche (300) umfasst und die positive Elektrodenlasche (300) in einen ersten Bereich (c) und einen zweiten Bereich (d) unterteilt ist, wobei der erste Bereich (c) mit dem positiven Elektrodenstromableiter (101) verbunden ist und sich der zweite Bereich (d) entlang einer Breitenrichtung des positiven Elektrodenstromableiters (101) vom ersten Bereich (c) nach außen bis außerhalb des positiven Elektrodenstromableiters (101) erstreckt;
**dadurch gekennzeichnet, dass** die Elektrodenanordnung ferner eine erste Schutzschicht (500) umfasst, wobei die erste Schutzschicht (500) mehrere Löcher aufweist, um Ionen den Durchtritt durch zwei zueinander parallele Oberflächen der ersten Schutzschicht (500) zu ermöglichen;
die erste Schutzschicht (500) auf Oberflächen des positiven Elektrodenstücks und des negativen Elektrodenstücks angeordnet ist, und in einer Projektionsebene auf der Grundlage einer Längsrichtung und einer Breitenrichtung der Elektrodenanordnung eine orthogonale Projektion der ersten Schutzschicht (500) in der Projektionsebene eine orthogonale Projektion des ersten Bereichs (c) in der Projektionsebene überdeckt.

2. Elektrodenanordnung nach Anspruch 1, wobei das negative Elektrodenstück einen negativen Elektrodenstromableiter (201) und eine negative Elektrodenlasche (400) umfasst, die in einen dritten Bereich (g) und einen vierten Bereich (h) unterteilt ist, wobei der dritte Bereich (g) mit dem negativen Elektrodenstromableiter (201) verbunden ist und sich der vierte Bereich (h) entlang einer Breitenrichtung des negativen Elektrodenstromableiters (201) vom dritten Bereich (g) nach außen bis außerhalb des negativen Elektrodenstromableiters (201) erstreckt;
wobei die Elektrodenanordnung ferner eine zweite Schutzschicht (600) umfasst, die in der Lage ist, den Durchtritt von Ionen durch zwei zueinander parallele Oberflächen der zweiten Schutzschicht (600) zu blockieren, wobei die zweite Schutzschicht (600) auf den Oberflächen des positiven Elektrodenstücks und des negativen Elektrodenstücks angeordnet ist und eine orthogonale Projektion der zweiten Schutzschicht (600) in der Projektionsebene eine orthogonale Projektion des dritten Bereichs (g) in der Projektionsebene überdeckt.

3. Elektrodenanordnung nach Anspruch 2, wobei die orthogonale Projektion der auf der Oberfläche des negativen Elektrodenstücks angeordneten zweiten Schutzschicht (600) in der Projektionsebene eine erste Projektion ist und die orthogonale Projektion der auf der Oberfläche des positiven Elektrodenstücks angeordneten zweiten Schutzschicht (600) in der Projektionsebene eine zweite Projektion ist, wobei die erste Projektion innerhalb der zweiten Projektion angeordnet ist.

4. Elektrodenanordnung nach Anspruch 1, wobei der positive Elektrodenstromableiter (101) eine erste Oberfläche (a) und eine zweite Oberfläche (b) umfasst, die zueinander parallel sind und einander gegenüberliegen, wobei die erste Oberfläche (a) mit dem ersten Bereich (c) der positiven Elektrodenlasche (300) verbunden ist, die zweite Oberfläche (b) mit einer positiven Elektrodenaktivmaterialschicht (102) versehen ist und eine orthogonale Projektion der positiven Elektrodenaktivmaterialschicht (102) auf den positiven Elektrodenstromableiter (101) eine orthogonale Projektion des ersten Bereichs (c) auf den positiven Elektrodenstromableiter (101) überdeckt oder nicht überdeckt;
die erste Schutzschicht (500) ist auf einer von dem positiven Elektrodenstromableiter (101) abgewandten Oberfläche des ersten Bereichs (c) und auf einer von dem positiven Elektrodenstromableiter (101) abgewandten Oberfläche der positiven Elektrodenaktivmaterialschicht (102) angeordnet.

5. Elektrodenanordnung nach Anspruch 4, wobei das negative Elektrodenstück einen negativen Elektrodenstromableiter (201) und eine auf einer Oberfläche des negativen Elektrodenstromableiters (201) angeordnete negative Elektrodenaktivmaterialschicht (202) umfasst, wobei eine von dem negativen Elektrodenstromableiter (201) abgewandte Oberfläche der negativen Elektrodenaktivmaterialschicht (202) ebenfalls mit der ersten Schutzschicht (500) versehen ist und die auf der Oberfläche der negativen Elektrodenaktivmaterialschicht (202) angeordnete erste Schutzschicht (500) der auf der Oberfläche des positiven Elektrodenstücks angeordneten ersten Schutzschicht (500) gegenüberliegt.

6. Elektrodenanordnung nach Anspruch 2, wobei der negative Elektrodenstromableiter (201) eine dritte Oberfläche (e) und eine vierte Oberfläche (f) umfasst, die zueinander parallel sind und einander gegenüberliegen, wobei die dritte Oberfläche (e) mit dem dritten Bereich (g) der negativen Elektrodenlasche (400) verbunden ist und die vierte Oberfläche (f) mit einer negativen Elektrodenaktivmaterialschicht (202) versehen ist, und eine orthogonale Projektion der negativen Elektrodenaktivmaterialschicht (202) auf den negativen Elektrodenstromableiter (201) eine orthogonale Projektion des dritten Bereichs (g) auf den negativen Elektrodenstromableiter (201) nicht überdeckt;
die zweite Schutzschicht (600) ist auf einer von dem negativen Elektrodenstromableiter (201) abgewandten Oberfläche des dritten Bereichs (g) und auf einer von dem negativen Elektrodenstromableiter (201) abgewandten Oberfläche der negativen Elektrodenaktivmaterialschicht (202) angeordnet.

7. Elektrodenanordnung nach Anspruch 6, wobei das positive Elektrodenstück ferner eine auf einer Oberfläche des positiven Elektrodenstromableiters (101) angeordnete positive Elektrodenaktivmaterialschicht (102) umfasst und die zweite Schutzschicht (600) auf einer von dem positiven Elektrodenstromableiter (101) abgewandten Oberfläche der positiven Elektrodenaktivmaterialschicht (102) angeordnet ist, wobei die auf der Oberfläche der positiven Elektrodenaktivmaterialschicht (102) angeordnete zweite Schutzschicht (600) der auf der Oberfläche des negativen Elektrodenstücks angeordneten zweiten Schutzschicht (600) gegenüberliegt.

8. Elektrodenanordnung nach Anspruch 2, wobei der negative Elektrodenstromableiter (201) eine dritte Oberfläche (e) und eine vierte Oberfläche (f) umfasst, die zueinander parallel sind und einander gegenüberliegen, wobei die dritte Oberfläche (e) mit dem dritten Bereich (g) der negativen Elektrodenlasche (400) verbunden ist und die vierte Oberfläche (f) mit einer negativen Elektrodenaktivmaterialschicht (202) versehen ist, und eine orthogonale Projektion der negativen Elektrodenaktivmaterialschicht (202) auf den negativen Elektrodenstromableiter (201) eine orthogonale Projektion des dritten Bereichs (g) auf den negativen Elektrodenstromableiter (201) überdeckt;
die erste Schutzschicht (500) ist auf einer von dem negativen Elektrodenstromableiter (201) abgewandten Oberfläche der negativen Elektrodenaktivmaterialschicht (202) angeordnet, und die zweite Schutzschicht (600) ist auf einer von dem negativen Elektrodenstromableiter (201) abgewandten Oberfläche des dritten Bereichs (g) angeordnet.

9. Elektrodenanordnung nach Anspruch 8, wobei das positive Elektrodenstück ferner eine auf einer Oberfläche des positiven Elektrodenstromableiters (101) angeordnete positive Elektrodenaktivmaterialschicht (102) umfasst und eine von dem positiven Elektrodenstromableiter (101) abgewandte Oberfläche der positiven Elektrodenaktivmaterialschicht (102) mit der ersten Schutzschicht (500) und der zweiten Schutzschicht (600) versehen ist;
die auf der Oberfläche der positiven Elektrodenaktivmaterialschicht (102) angeordnete erste Schutzschicht (500) liegt der auf der Oberfläche des negativen Elektrodenstücks angeordneten ersten Schutzschicht (500) gegenüber, und die auf der Oberfläche der positiven Elektrodenaktivmaterialschicht (102) angeordnete zweite Schutzschicht (600) liegt der auf der Oberfläche des negativen Elektrodenstücks angeordneten zweiten Schutzschicht (600) gegenüber.

10. Elektrodenanordnung nach einem der Ansprüche 1 bis 9, wobei das positive Elektrodenstück ferner eine auf einer Oberfläche des positiven Elektrodenstromableiters (101) angeordnete positive Elektrodenaktivmaterialschicht (102) umfasst und mindestens ein Teil einer Oberfläche der positiven Elektrodenaktivmaterialschicht (102) nahe einem Wickelendpunkt mit einer zweiten Schutzschicht (600) versehen ist, die in der Lage ist, den Durchtritt von Ionen durch zwei zueinander parallele Oberflächen der zweiten Schutzschicht (600) zu blockieren, und sich die zweite Schutzschicht (600) in Richtung des Wickelendpunkts bis zu dem mindestens einen Teil der Oberfläche des positiven Elektrodenstromableiters (101) erstreckt.

11. Elektrodenanordnung nach einem der Ansprüche 1 bis 10, wobei die erste Schutzschicht (500) eine Klebstoffschicht (602) umfasst und die Klebstoffschicht (602) eines von Polystyrol, Polyisobutylen, Polypropylen, epoxidiertem Polyisobutylen, Polyphenylbutylen oder Polybutylencyanid umfasst.

12. Elektrodenanordnung nach Anspruch 11, wobei die erste Schutzschicht (500) eine erste Klebstoffschicht (501) und eine zweite Klebstoffschicht (502) umfasst, die der Reihe nach laminiert sind, und eine Schälfestigkeit der ersten Klebstoffschicht (501) und eine Schälfestigkeit der zweiten Klebstoffschicht (502) gleich oder verschieden sind.

13. Batterie, umfassend die Elektrodenanordnung nach einem der Ansprüche 1 bis 12.

14. Batterie nach Anspruch 13, wobei die Batterie eine Knopfbatterie ist und ferner ein Gehäuse (700) aufweist, das die Elektrodenanordnung einkapselt; das Gehäuse (700) aufweisend ein erstes Elektrodenstück (800) und ein zweites Elektrodenstück; und die erste Schutzschicht (500) ist zwischen dem ersten Elektrodenstück (800) und dem zweiten Elektrodenstück angeordnet.

## Revendications

1. Assemblage d'électrodes, comprenant une pièce d'électrode positive, un séparateur et une pièce d'électrode négative qui sont stratifiés successivement et formés par enroulement, dans lequel la pièce d'électrode positive comprend un collecteur de courant d'électrode positive (101) et une languette d'électrode positive (300), et la languette d'électrode positive (300) est divisée en une première région (c) et une deuxième région (d), la première région (c) étant reliée au collecteur de courant d'électrode positive (101) et la deuxième région (d) s'étendant vers l'extérieur à partir de la première région (c) le long d'une direction de largeur du collecteur de courant d'électrode positive (101) jusqu'à l'extérieur du collecteur de courant d'électrode positive (101) ;
**caractérisé en ce que** l'assemblage d'électrodes comprend en outre une première couche de protection (500), la première couche de protection (500) présentant plusieurs trous pour permettre aux ions de passer à travers deux surfaces de la première couche de protection (500) qui sont parallèles l'une à l'autre ;
la première couche de protection (500) est disposée sur des surfaces de la pièce d'électrode positive et de la pièce d'électrode négative, et, dans un plan de projection basé sur une direction de longueur et une direction de largeur de l'assemblage d'électrodes, une projection orthogonale de la première couche de protection (500) dans le plan de projection recouvre une projection orthogonale de la première région (c) dans le plan de projection.

2. Assemblage d'électrodes selon la revendication 1, dans lequel la pièce d'électrode négative comprend un collecteur de courant d'électrode négative (201) et une languette d'électrode négative (400) qui est divisée en une troisième région (g) et une quatrième région (h), la troisième région (g) étant reliée au collecteur de courant d'électrode négative (201) et la quatrième région (h) s'étendant vers l'extérieur à partir de la troisième région (g) le long d'une direction de largeur du collecteur de courant d'électrode négative (201) jusqu'à l'extérieur du collecteur de courant d'électrode négative (201) ;
l'assemblage d'électrodes comprenant en outre une deuxième couche de protection (600) capable d'empêcher les ions de passer à travers deux surfaces de la deuxième couche de protection (600) qui sont parallèles l'une à l'autre, dans laquelle la deuxième couche de protection (600) est disposée sur les surfaces de la pièce d'électrode positive et de la pièce d'électrode négative, et une projection orthogonale de la deuxième couche de protection (600) dans le plan de projection recouvre une projection orthogonale de la troisième région (g) dans le plan de projection.

3. Assemblage d'électrodes selon la revendication 2, dans lequel la projection orthogonale de la deuxième couche de protection (600) disposée sur la surface de la pièce d'électrode négative dans le plan de projection est une première projection, et la projection orthogonale de la deuxième couche de protection (600) disposée sur la surface de la pièce d'électrode positive dans le plan de projection est une deuxième projection, la première projection étant située à l'intérieur de la deuxième projection.

4. Assemblage d'électrodes selon la revendication 1, dans lequel le collecteur de courant d'électrode positive (101) comprend une première surface (a) et une deuxième surface (b) qui sont parallèles et opposées l'une à l'autre, la première surface (a) étant reliée à la première région (c) de la languette d'électrode positive (300), la deuxième surface (b) étant pourvue d'une couche de matériau actif d'électrode positive (102), et une projection orthogonale de la couche de matériau actif d'électrode positive (102) sur le collecteur de courant d'électrode positive (101) recouvre ou ne recouvre pas une projection orthogonale de la première région (c) sur le collecteur de courant d'électrode positive (101) ;
la première couche de protection (500) est disposée sur une surface de la première région (c) opposée au collecteur de courant d'électrode positive (101) et sur une surface de la couche de matériau actif d'électrode positive (102) opposée au collecteur de courant d'électrode positive (101).

5. Assemblage d'électrodes selon la revendication 4, dans lequel la pièce d'électrode négative comprend un collecteur de courant d'électrode négative (201) et une couche de matériau actif d'électrode négative (202) disposée sur une surface du collecteur de courant d'électrode négative (201), une surface de la couche de matériau actif d'électrode négative (202) opposée au collecteur de courant d'électrode négative (201) étant également pourvue de la première couche de protection (500), et la première couche de protection (500) disposée sur la surface de la couche de matériau actif d'électrode négative (202) étant opposée à la première couche de protection (500) disposée sur la surface de la pièce d'électrode positive.

6. Assemblage d'électrodes selon la revendication 2, dans lequel le collecteur de courant d'électrode négative (201) comprend une troisième surface (e) et une quatrième surface (f) qui sont parallèles et opposées l'une à l'autre, la troisième surface (e) étant reliée à la troisième région (g) de la languette d'électrode négative (400) et la quatrième surface (f) étant pourvue d'une couche de matériau actif d'électrode négative (202), et une projection orthogonale de la couche de matériau actif d'électrode négative (202) sur le collecteur de courant d'électrode négative (201) ne recouvre pas une projection orthogonale de la troisième région (g) sur le collecteur de courant d'électrode négative (201) ; la deuxième couche de protection (600) est disposée sur une surface de la troisième région (g) opposée au collecteur de courant d'électrode négative (201) et sur une surface de la couche de matériau actif d'électrode négative (202) opposée au collecteur de courant d'électrode négative (201).

7. Assemblage d'électrodes selon la revendication 6, dans lequel la pièce d'électrode positive comprend en outre une couche de matériau actif d'électrode positive (102) disposée sur une surface du collecteur de courant d'électrode positive (101), et la deuxième couche de protection (600) est disposée sur une surface de la couche de matériau actif d'électrode positive (102) opposée au collecteur de courant d'électrode positive (101), la deuxième couche de protection (600) disposée sur la surface de la couche de matériau actif d'électrode positive (102) étant opposée à la deuxième couche de protection (600) disposée sur la surface de la pièce d'électrode négative.

8. Assemblage d'électrodes selon la revendication 2, dans lequel le collecteur de courant d'électrode négative (201) comprend une troisième surface (e) et une quatrième surface (f) qui sont parallèles et opposées l'une à l'autre, la troisième surface (e) étant reliée à la troisième région (g) de la languette d'électrode négative (400) et la quatrième surface (f) étant pourvue d'une couche de matériau actif d'électrode négative (202), et une projection orthogonale de la couche de matériau actif d'électrode négative (202) sur le collecteur de courant d'électrode négative (201) recouvre une projection orthogonale de la troisième région (g) sur le collecteur de courant d'électrode négative (201) ;
la première couche de protection (500) est disposée sur une surface de la couche de matériau actif d'électrode négative (202) opposée au collecteur de courant d'électrode négative (201), et la deuxième couche de protection (600) est disposée sur une surface de la troisième région (g) opposée au collecteur de courant d'électrode négative (201).

9. Assemblage d'électrodes selon la revendication 8, dans lequel la pièce d'électrode positive comprend en outre une couche de matériau actif d'électrode positive (102) disposée sur une surface du collecteur de courant d'électrode positive (101), et une surface de la couche de matériau actif d'électrode positive (102) opposée au collecteur de courant d'électrode positive (101) est pourvue de la première couche de protection (500) et de la deuxième couche de protection (600) ;
la première couche de protection (500) disposée sur la surface de la couche de matériau actif d'électrode positive (102) est opposée à la première couche de protection (500) disposée sur la surface de la pièce d'électrode négative, et la deuxième couche de protection (600) disposée sur la surface de la couche de matériau actif d'électrode positive (102) est opposée à la deuxième couche de protection (600) disposée sur la surface de la pièce d'électrode négative.

10. Assemblage d'électrodes selon l'une quelconque des revendications 1 à 9, dans lequel la pièce d'électrode positive comprend en outre une couche de matériau actif d'électrode positive (102) disposée sur une surface du collecteur de courant d'électrode positive (101), et au moins une partie d'une surface de la couche de matériau actif d'électrode positive (102) proche d'un point terminal d'enroulement est pourvue d'une deuxième couche de protection (600) capable d'empêcher les ions de passer à travers deux surfaces de la deuxième couche de protection (600) qui sont parallèles l'une à l'autre, et la deuxième couche de protection (600) s'étend vers le point terminal d'enroulement jusqu'à ladite au moins une partie de la surface du collecteur de courant d'électrode positive (101).

11. Assemblage d'électrodes selon l'une quelconque des revendications 1 à 10, dans lequel la première couche de protection (500) comprend une couche adhésive (602), et la couche adhésive (602) comprend l'un parmi le polystyrène, le polyisobutylène, le polypropylène, le polyisobutylène époxydé, le polyphénylbutylène ou le cyanure de polybutylène.

12. Assemblage d'électrodes selon la revendication 11, dans lequel la première couche de protection (500) comprend une première couche adhésive (501) et une deuxième couche adhésive (502) qui sont stratifiées successivement, et une résistance au pelage de la première couche adhésive (501) et une résistance au pelage de la deuxième couche adhésive (502) sont identiques ou différentes.

13. Batterie, comprenant l'assemblage d'électrodes selon l'une quelconque des revendications 1 à 12.

14. Batterie selon la revendication 13, dans laquelle la batterie est une batterie bouton et comprend en outre un boîtier (700) encapsulant l'assemblage d'électrodes ; le boîtier (700) comprenant une première pièce d'électrode (800) et une deuxième pièce d'électrode ; et la première couche de protection (500) est disposée entre la première pièce d'électrode (800) et la deuxième pièce d'électrode.
